Europäisches Patentamt

(19) European Patent Office

Office européen des brevets

(11) Numéro de publication: **0 204 599**
**B1**

(12) **FASCICULE DE BREVET EUROPEEN**

(45) Date de publication du fascicule du brevet:
02.11.89

(51) Int. Cl.⁴: **G01V 13/00**

(21) Numéro de dépôt: **86401013.7**

(22) Date de dépôt: **12.05.86**

(54) **Procédé et dispositif pour la détermination de la signature d'émission à grande distance d'un ensemble d'émission sismique.**

(30) Priorité: **17.05.85 FR 8507582**

(43) Date de publication de la demande:
**10.12.86 Bulletin 86/50**

(45) Mention de la délivrance du brevet:
**02.11.89 Bulletin 89/44**

(84) Etats contractants désignés:
**DE GB IT NL**

(56) Documents cités:
**EP-A- 0 066 423**
**US-A- 3 866 161**

(73) Titulaire: **INSTITUT FRANCAIS DU PETROLE, 4, Avenue de Bois-Préau, F-92502 Rueil-Malmaison(FR)**

(72) Inventeur: **Brac, Jean, 5 rue Réaumur, F-17600 Saujon(FR)**

(74) Mandataire: **Kermarrec, Michelle et al, Institut Français du Pétrole 4, avenue de Bois-Préau, F-92502 Rueil-Malmaison(FR)**

## Description

L'invention a pour objet un procédé de détermination de la signature à grande distance d'un ensemble d'émission d'impulsions sismiques dans l'eau, comportant une pluralité de sources sismiques combinées et en particulier d'un ensemble de sources sismiques fonctionnant par implosion, et un dispositif pour sa mise en oeuvre.

L'émission dans l'eau d'impulsions sismiques peut être obtenue par exemple par la brusque contraction d'une cavité immergée où règne une pression très faible par rapport à la pression hydrostatique. Cette cavité peut être délimitée par les parois d'une enceinte de volume variable du type décrit par exemple dans le brevet français FR-A 1.583.737.

Elle peut être obtenue également par la décharge à grande vitesse dans l'eau d'un certain volume de liquide sous pression contenu dans une chambre immergée. Une source du type canon à eau est décrite par exemple dans le brevet français FR-A 2 558 600.

Les impulsions sismiques engendrées ont une forme qui dépend du type de source utilisé, de ses caractéristiques mécaniques, éventuellement de la pression du fluide hydraulique propulseur permettant l'éjection de liquide, et aussi de sa profondeur d'immersion.

La forme des impulsions sismiques engendrées par une source déterminée, qui constitue la signature d'émission de celle-ci, est en général bien reproductible dans des conditions définies d'utilisation et ne dépend que de la profondeur d'immersion. On la détermine au moyen d'un capteur de pression disposé à proximité.

Lorsque plusieurs sources sont actionnées en combinaison, elles interagissent les unes sur les autres de manière complexe si bien que la signature de chacune d'elles, mesurée par un capteur de pression proche, est différente de celle que l'on obtient lorsqu'elle fonctionne isolément.

Pour certains traitements des enregistrements obtenus en captant les échos sur les différentes couches réfléchissantes du sous-sol, il est important de connaître la signature globale à l'infini de l'ensemble des sources combinées. Une telle signature peut être obtenue par une combinaison linéaire des signatures des différentes sources considérées isolément. Ceci est impossible à faire directement à partir des mesures effectuées par différents capteurs de pression immergés au voisinage des différentes sources du fait des interactions qui se produisent.

Un procédé connu pour déterminer la signature globale d'un ensemble de sources combinées consiste à immerger autant de capteurs de pression qu'il y a de sources, la position des capteurs relativement à celles-ci étant connue, à traiter leurs différentes mesures en tenant compte des interactions de manière à déterminer les signatures équivalentes des sources, corrigées des effets d'interaction, et à superposer les signatures corrigées pour obtenir la signature globale à grande distance.

Une telle méthode qui est appliquée à des canons à air et décrite dans la demande de brevet européen EP-A 66.423, est difficile à mettre en pratique car elle exige une connaissance précise de la position des différents capteurs et des différentes sources relativement les uns aux autres aux instants de déclenchement, et ceci est d'autant plus difficile à réaliser que le nombre d'éléments du dispositif d'émission est important.

Le procédé selon l'invention permet de déterminer la signature d'émission globale à grande distance d'un ensemble d'émission comportant un nombre N de sources combinées, qui n'a pas les inconvénients indiqués ci-dessus.

Il est caractérisé en ce qu'il comporte :
- la mesure des signatures d'émission de chacune des N sources actionnée isolément, préalablement à l'utilisation de l'ensemble d'émission, pour différentes valeurs de paramètres influant sur la forme des impulsions produites par les sources, au moyen de capteurs appropriés disposés au voisinage de chacune des N sources et l'établissement d'un catalogue de toutes les mesures effectuées successivement pour toutes les sources de l'ensemble d'émission,
- la mesure des valeurs effectives de ces mêmes paramètres pour toutes les sources, au moment de leur utilisation combinée,
- la sélection dans le catalogue des signatures respectives des N sources de l'ensemble d'émission correspondant aux valeurs effectives mesurées pour lesdits paramètres, et
- la détermination de la signature d'émission globale à grande distance de l'ensemble d'émission par une combinaison linéaire des N signatures d'émission sélectionnées dans le catalogue, en tenant compte des instants de déclenchement effectifs des différentes sources de l'ensemble d'émission.

La constitution préalable d'un catalogue de signatures des différentes sources fonctionnant chacune de manière isolée, et par conséquent exemptes des perturbations apportées par leur utilisation combinée, et la mesure des paramètres de fonctionnement de chaque source permettant de sélectionner la signature d'émission cataloguée qu'elle aurait dans ces mêmes conditions de fonctionnement si elle émettait toute seule, rend possible par synthèse, la détermination de la signature globale à grande distance de l'ensemble d'émission, et ceci sans avoir à connaître la configuration relative des sources et des capteurs de mesure.

Les paramètres influant sur la forme des impulsions produites sont la profondeur et éventuellement d'autres paramètres dépendant du type de source utilisée.

D'autres caractéristiques et avantages du procédé selon l'invention et de son dispositif de mise en oeuvre, apparaîtront à la lecture de la description de modes de réalisation particuliers, donnés à titre d'exemples non limitatifs et illustrés par les dessins annexés, où :

- la figure 1 représente schématiquement les trajets des ondes acoustiques entre un emplacement de source $e_i$ au voisinage de la surface de l'eau I et celui d'un capteur H disposé à une certaine distance de la source,
- la figure 2 est analogue à la figure 1 et correspond au cas où le capteur est reporté à l'infini,
- la figure 3 représente le schéma synoptique d'un premier mode de réalisation du dispositif de mise en oeuvre,
- la figure 4 représente le schéma synoptique d'une variante du mode de réalisation de la figure 3,
- la figure 5 représente très schématiquement une signature de source,
et,
- la figure 6 représente un chronogramme d'un signal de commande permettant d'utiliser un capteur à la fois pour mesurer la profondeur d'immersion d'une source et de déterminer sa signature d'émission.

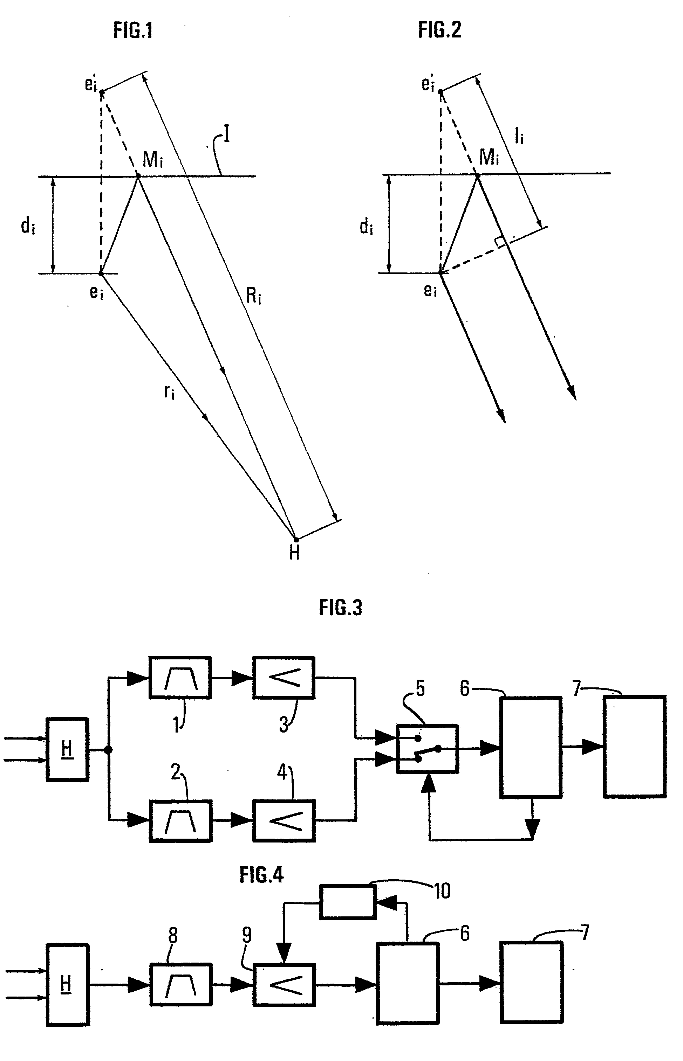

La signature d'une source $e_i$ est la variation en fonction du temps t de la pression mesurée par le capteur H résultant de l'impulsion acoustique émise par la source après son déclenchement (Fig. 1).

La signature rapprochée $s_i$ (ou "near field") est mesurée à une distance de référence $r_1$ de l'ordre de 1 mètre par exemple. La signature de la source, mesurée à une certaine distance au-dessous de la source, est une combinaison de l'impulsion qui se propage directement de $e_i$ à H avec celle, désignée généralement par "fantôme" qui parvient au capteur décalé dans le temps après réflexion en un point $M_i$ sur l'interface eau/air I.

Lorsque l'on utilise plusieurs sources $e_i$ disposées à des profondeurs $d_i$, on les déclenche de manière à mettre en phase leurs pics d'implosion respectifs. Le décalage de temps entre les instants de déclenchement de deux sources quelconques correspondant à la durée de propagation des ondes acoustiques de l'une à l'autre, à la vitesse de propagation V.

La signature éloignée $S_H$ (ou "far field") d'un ensemble de N sources $e_i$, mesurée par l'hydrophone H s'exprime de manière connue par la relation :

$$S_H(t) = \sum_{i=1}^{N} \frac{r_1}{r_i} s_i(t - \frac{d_i}{V} - \frac{r_i}{V}) + \rho \frac{r_1}{R_i} s_i(t - \frac{d_i}{V} - \frac{R_i}{V}) \qquad (1)$$

$s_i$ est la signature de la source $e_i$,
$r_i$ et $R_i$ sont respectivement les distances $e_iH$ et $e_iM_iH$, et P est le coefficient de réflexion de l'interface eau/air qui est très peu différent de -1.

On peut montrer, et cela est bien connu des spécialistes, que la signature S à l'infini ou pour le moins à très grande distance (Fig. 2), d'un ensemble d'émission constitué d'un nombre N de sources à implosion, $e_1$, $e_2$...$e_N$ déclenchées en séquence de manière à mettre en phase leurs pics d'implosion, est une combinaison linéaire des signatures $s_i$ des différentes sources $e_i$ considérées isolément et s'exprime par une relation du type :

$$S(t) = \sum_{i=1}^{N} s_i(t - \frac{d_i}{V}) + \rho s_i(t - \frac{d_i}{V} - \frac{l_i}{V}) \qquad (2)$$

où $l_i$ représente la projection, sur la direction de recombinaison, de la distance entre chaque source $e_i$ et son image $e'_i$. Cette relation est indépendante de la géométrie de l'ensemble d'émission, c'est-à-dire de la position relative des différentes sources les unes par rapport aux autres et de leurs interactions.

Le procédé selon l'invention comporte la mesure préalable des signatures d'émission de chacune des sources $e_i$ actionnée isolément par un hydrophone disposé à courte distance (1 mètre par exemple) pour différentes valeurs de paramètres influant sur la forme des impulsions produites. Le principal paramètre est la profondeur d'immersion.

D'autres paramètres, tenant plus spécifiquement à la nature des sources, tels que la pression du fluide éjecté dans le cas de canons à implosion, sont également pris en compte.

On corrige de préférence les signatures d'émission mesurées, de manière à éliminer de celles-ci les contributions dues aux réflexions sur l'interface eau/air I ("fantômes"). Les mesures étant faites à proximité immédiate de chaque source $e_i$, l'intensité relative des "fantômes" par rapport à celles des impulsions directes, est relativement faible (de l'ordre de $1/10^e$).

3

On dresse alors un catalogue de toutes les mesures effectuées successivement pour toutes les sources. Les données de ce catalogue sont stockées par exemple dans une mémoire de calculateur.

Lorsque l'ensemble d'émission est remorqué dans l'eau dans le cadre d'opérations de prospection sismique en mer, et que ses différentes sources sont actionnées, on procéde de la manière suivante :

- On mesure au moyen d'hydrophones disposés à proximité immédiate de chacune d'elles, leurs profondeurs d'immersion respectives. On mesure éventuellement au moyen d'autres capteurs appropriés les valeurs d'autres paramètres influant sur leurs signatures.

- On enregistre les signatures d'émission des différentes sources, de manière à déterminer les instants respectifs de leurs pics d'implosion et aussi à détecter d'éventuelles anomalies ou perturbations de fonctionnement.

- On modifie chacune des signatures d'émission extraites du catalogue, de manière à lui ajouter la contribution due aux réflexions sur l'interface, que l'on observerait à très grande distance à la profondeur effective d'utilisation de la source correspondante. La contribution du "fantôme" à la signature d'émission de la source est, à l'infini, pratiquement identique à celle de l'onde directe, du point de vue amplitude. La modification consiste essentiellement à ajouter à chaque signature d'émission celle d'un "fantôme" d'amplitude égale convenablement déphasé.

- On effectue alors une combinaison linéaire des signatures modifiées en accord avec la relation 2. De préférence, on déphase les signatures modifiées avant leur combinaison, de manière à tenir compte des intervalles de temps entre les instants de déclenchement respectifs des différentes sources, qu'ils soient introduits délibérément ou résultent d'une certaine dispersion dans les conditions de fonctionnement.

On peut alors utiliser la signature à l'infini que l'on a synthétisée par cette combinaison pour différentes opérations de traitement sur les enregistrements sismiques réalisés à partir des échos sur des réflecteurs souterrains, des ébranlements sismiques engendrés par l'ensemble de sources.

Les deux étapes de correction ou modification des signatures avant leur inclusion dans le catalogue pour éliminer la contribution du fantôme à l'infini, sont facultatives. Elles peuvent être aussi réalisées toutes les deux au moment de la constitution du catalogue, de manière à collecter dans celui-ci des exemplaires de signatures à l'infini prêtes pour les combinaisons.

La mise en oeuvre du procédé est effectuée avantageusement en utilisant des moyens de réception adaptés à mesurer alternativement la profondeur d'immersion de chaque source et sa signature d'émission, la profondeur d'immersion au moment précis de son déclenchement étant déterminée par combinaison des mesures de profondeur antérieures et postérieures à l'instant de "tir".

Le dispositif de mise en oeuvre du procédé comporte pour chacune des sources un capteur unique H disposé à proximité et connecté à l'entrée d'un système d'acquisition représenté à la figure 3. Le signal fourni par le capteur H est appliqué à l'entrée de deux voies d'amplification différentes, chacune comportant un filtre passe-bande 1, 2 et un amplificateur 3, 4.

Les deux amplificateurs 3, 4 ont des gains différents $g_1$ et $g_2$. Les signaux qu'ils délivrent sont appliqués à deux entrées d'un commutateur électronique 5, la sortie de celui-ci étant connectée à l'entrée d'un ensemble de numérisation et d'enregistrement 6. Celui-ci comporte des moyens pour mémoriser les différentes signatures d'émission constituant le catalogue et des moyens pour délivrer un signal de commande du commutateur 5, permettant de sélectionner l'un ou l'autre des signaux issus des amplificateurs 3 ou 4.

Un calculateur 7 est connecté à l'ensemble de numérisation et d'enregistrement 6. Il est adapté à effectuer les combinaisons de signatures d'émission sélectionnées dans le catalogue pour synthétiser la signature globale à l'infini de l'ensemble des sources.

Le gain de l'amplificateur 3 est choisi suffisamment grand pour que le signal qu'il délivre constitue une mesure précise de la pression hydro statique et par conséquent, de la profondeur d'immersion de la source associée.

Celui de l'amplificateur 4 est choisi plus faible pour que le signal à sa sortie restitue fidèlement et sans écrêtage, les variations de la pression engendrées par la source à son déclenchement.

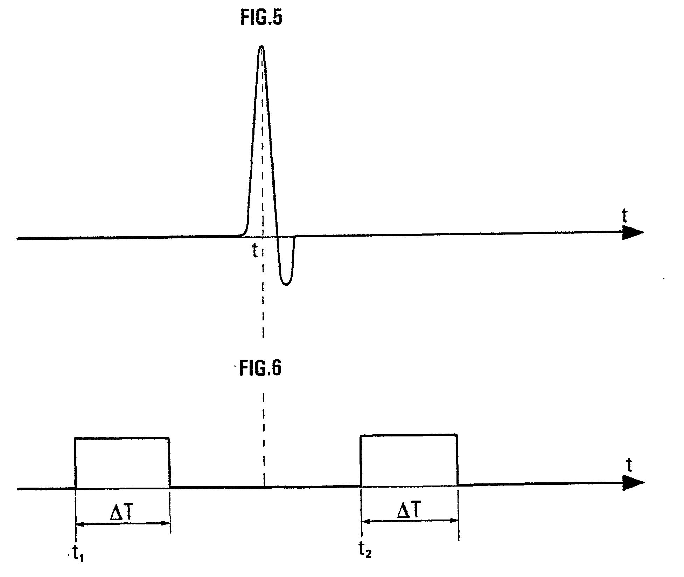

Une source devant être déclenchée à un instant t (Fig. 5), on effectue une mesure de la profondeur d'immersion à un instant $t_1$ antérieur et à un instant $t_2$ postérieur (Fig. 6). A cet effet, l'ensemble 6 applique au commutateur 5 aux instants $t_1$ et $t_2$ et pendant un intervalle de temps ou fenêtre $\Delta T$, un signal de commande permettant de sélectionner l'amplificateur 3.

Les deux mesures de profondeur qui encadrent l'instant t de déclenchement sont successivement mémorisées et le calculateur 7 effectue une interpolation entre elles, de manière à déterminer avec précision la profondeur d'immersion de la source au moment du "tir". En dehors de ces deux fenêtres de mesure de profondeur, le commutateur est commandé pour sélectionner le signal délivré par l'amplificateur 4 qui traduit la signature d'émission de la source.

Suivant un autre mode de réalisation (Fig. 4), le système d'acquisition peut comporter une voie unique d'amplification comportant un filtre passe-bande 8 et un amplificateur à gain variable 9 dont le gain peut prendre au moins deux valeurs de gain différentes $g_1$, $g_2$ suivant le signal de commande que lui applique un élément de contrôle de gain 10 piloté par l'ensemble d'enregistrement 6. Le gain $g_1$ permettant une mesure fine de la profondeur d'immersion est appliquée à l'amplificateur 9 aux instants $t_1$ et $t_2$ et pendant un intervalle de temps $\Delta T$.

Le gain $g_2$ lui, est appliqué en dehors des fenêtres de mesure, de façon à obtenir la signature d'émission de la source. De la même manière, le calculateur 7 détermine la valeur précise de la profondeur d'immersion par interpolations entre les valeurs mesurées aux instants $t_1$ et $t_2$.

**Revendications**

1. - Procédé de détermination de la signature à grande distance d'un ensemble d'émission dans l'eau d'impulsions sismiques comportant un nombre N de sources sismiques combinées, caractérisé en ce qu'il comporte :
- la mesure des signatures d'émission de chacune des N sources actionnée isolément, préalablement à l'utilisation de l'ensemble d'émission, pour différentes valeurs de paramètres influant sur la forme des impulsions produites par les sources, au moyen de capteurs appropriés disposés au voisinage de chacune des N sources et l'établissement d'un catalogue de toutes les mesures effectuées successivement pour toutes les sources de l'ensemble d'émission,
- la mesure des valeurs effectives de ces mêmes paramètres pour toutes les sources, au moment de l'utilisation combinée de celles-ci,
- la sélection dans le catalogue des signatures d'émission respectives des N sources de l'ensemble d'émission correspondant aux valeurs effectives mesurées pour lesdits paramètres, et
- la détermination de la signature d'émission globale à grande distance de l'ensemble d'émission par une combinaison linéaire des N signatures d'émission sélectionnées dans le catalogue, en tenant compte des instants de déclenchement effectifs des différentes sources.

2. - Procédé selon la revendication 1, caractérisé en ce que l'on établit un catalogue des signatures d'émission de chacune des N sources de l'ensemble d'émission à une pluralité de profondeurs d'immersion différentes, la mesure desdites valeurs effectives comportant l'utilisation des capteurs de mesure de signatures.

3. - Procédé selon la revendication 1, caractérisé en ce que l'on établit un catalogue des signatures d'émission de chacune des N sources de l'ensemble d'émission en faisant varier des paramètres de fonctionnement de ladite source.

4. - Procédé selon l'une des revendications précédentes, caractérisé en ce que la profondeur d'immersion de chacune des sources est déterminée par combinaison de mesures de profondeur effectuées avant et après l'émission de chaque impulsion sismique.

5. - Dispositif pour la mise en oeuvre du procédé selon la revendication 4, comportant des moyens de réception pour capter les ondes acoustiques émises par les N sources, un système d'acquisition comportant des moyens d'amplification des signaux fournis par les moyens de réception, des moyens (6) de numérisation et d'enregistrement des signaux numérisés, des moyens de traitement et des moyens de mémorisation des signatures d'émission constituant le catalogue, les moyens de réception comportant un capteur (H) disposé au voisinage de chaque source $(e_i)$ caractérisé en ce que le système d'acquisition comporte des moyens de sélection pour appliquer aux moyens de numérisation et d'enregistrement des signaux correspondant à ceux fournis par chaque capteur et amplifiés avec un gain différent selon que l'on veut déterminer la profondeur d'immersion de la source ou sa signature d'émission.

6. - Dispositif selon la revendication 5, caractérisé en ce que les moyens d'amplification comportent deux amplificateurs (3, 4) adaptés à amplifier parallèlement les signaux fournis par chaque capteur (H) et lesdits moyens de sélection comportent un commutateur (5) actionné par les moyens de numérisation et d'enregistrement (6) avant et après l'émission de chaque impulsion sismique.

7. - Dispositif selon la revendication 5, caractérisé en ce que les moyens d'amplification comportent un amplificateur unique (9) à gain variable adapté à amplifier les signaux fournis par chaque capteur (H) et les moyens de sélection comportent un élément (10), actionné par les moyens de numérisation et d'enregistrement (6), pour engendrer un signal de commande permettant de donner alternativement au gain de l'amplificateur (9), deux valeurs différentes.

**Patentansprüche**

1. Verfahren um aus großer Entfernung die Signatur einer Abstrahlanordnung in Wasser seismischer Impulse mit einer Anzahl N kombinierter seismischer Quellen zu bestimmen, dadurch gekennzeichnet, daß es umfaßt:
– die Messung der Abstrahlsignaturen jeder der N isoliert betätigten Quellen vor Benützung der Abstrahlanordnung, für unterschiedliche Parameterwerte, die Einfluß auf die Form der durch die Quellen erzeugten Impulse haben, mittels geeigneter Aufnehmer, die benachbart jeder der N Quellen angeordnet sind und die Erstellung eines Katalogs sämtlicher nacheinander für sämtliche Quellen der Abstrahlanordnung ausgeführten Messungen,
– Messung der effektiven Werte eben dieser Parameter für sämtliche Quellen im Augenblick der kombinierten Verwendung von diesen,
– Auswahl, im Katalog der jeweiligen Abstrahlsignaturen, der N Quellen der Abstrahlanordnung entsprechend den effektiv für diese Parameter gemessenen Werten, und

– Bestimmung der globalen Abstrahlsignatur unter großer Entfernung der Abstrahlanordnung durch eine lineare Kombination der N im Katalog ausgewählten Abstrahlsignaturen, unter Berücksichtigung der effektiven Auslöseaugenblicke der unterschiedlichen Quellen.

2. Verfahren nach Anspruch 1, dadurch gekennzeichnet, daß man einen Katalog der Abstrahlsignaturen jeder der N Quellen der Abstrahlanordnung auf einer Vielzahl von unterschiedlichen Tauchtiefen erstellt, wobei die Messung dieser effektiven Werte die Verwendung der Signaturmeßaufnehmer umfaßt.

3. Verfahren nach Anspruch 1, dadurch gekennzeichnet, daß man einen Katalog der Abstrahlsignaturen jeder der N Quellen der Abstrahlanordnung erstellt, indem man Funktionsparameter dieser Quellen variieren läßt.

4. Verfahren nach einem der vorhergehenden Ansprüche, dadurch gekennzeichnet, daß die Tauchtiefe jeder der Quellen bestimmt wird durch die Kombination von Tiefenmessungen, die vor und nach der Abstrahlung jedes seismischen Impulses vorgenommen werden.

5. Vorrichtung zur Durchführung des Verfahrens nach Anspruch 4 mit Empfangseinrichtungen zum Aufnehmen der durch die N Quellen ausgesandten akustischen Wellen, einem Erfassungssystem mit Einrichtungen zur Verstärkung der durch die Empfangseinrichtungen gelieferten Signale, Einrichtungen (6) zur Digitalisierung und Aufzeichnung der digitalisierten Signale, Verarbeitungseinrichtungen und Einrichtungen zum Speichern der den Katalog bildenden Abstrahlsignaturen, wobei die Empfangseinrichtungen einen Aufnehmer (H) umfassen, der benachbart jeder Quelle (ei) angeordnet ist, dadurch gekennzeichnet, daß das Erfassungssystem Auswahleinrichtungen umfaßt, um an die Digitalisierungs- und Aufzeichnungseinrichtungen Signale zu legen, die denen für jeden Aufnehmer gelieferten entsprechen und mit einer unterschiedlichen Verstärkung verstärkt werden, je nachdem, ob man die Tauchtiefe der Quelle oder die Abstrahlsignatur bestimmen will.

6. Vorrichtung nach Anspruch 5, dadurch gekennzeichnet, daß die Verstärkereinrichtungen zwei Verstärker (3, 4) umfassen, die so ausgebildet sind, daß sie parallel die durch jeden Aufnehmer (H) gelieferten Signale verstärken und daß die Auswahleinrichtungen einen Umschalter (5) umfassen, der durch die Digitalisierungs- und Aufzeichnungseinrichtungen (6) vor und nach der Abstrahlung jedes seismischen Impulses betätigt wird.

7. Vorrichtung nach Anspruch 5, dadurch gekennzeichnet, daß die Verstärkereinrichtungen einen einzigen Verstärker (9) mit variabler Verstärkung umfaßen, derartiger Ausbildung, daß die durch jeden Aufnehmer (H) gelieferten Signale verstärkt werden und die Auswahleinrichtungen ein Element (10) umfassen, das durch die Digitalisierungs- und Aufzeichnungseinrichtungen (6) betätigt ist, um ein Steuersignal zu erzeugen, welches ermöglicht, der Verstärkung des Verstärkers (9) zwei unterschiedliche Werte zu verleihen.

**Claims**

1. Method for determining the remote signature of a device transmitting, in water, seismic pulses and comprising a number N of combined seismic sources, characterised in that it includes:
– the measurement of the transmission signatures for each of the N sources activated separately, prior to the use of the transmission device, for different values of the parameters affecting the form of the pulses produced by the sources, by means of suitable sensors located in the vincinity of each of the N sources and the compilation of a catalogue for all the measurements carried out in succession for all the transmission device sources
– measurement of the effective values of these same parameters, for all the sources, at the time that they are used in combination
– selection, from the catalogue, of the respective transmission signatures for the N sources comprising the transmission device and corresponding to the effective values measured for the said parameters, and
– determination of the overall remote transmission signature for the transmission device by a linear combination of the N transmission signatures selected from the catalogue, taking into account the points of time for effective initiation of the different sources.

2. Method in accordance with claim 1, characterised in that a catalogue of the transmission signatures is compiled for each of the N sources for the transmission device, at a number of different depths of immersion, the measurement of the said effective values comprising the use of sensors for measuring the signatures.

3. Method in accordance with claim 1, characterised in that a catalogue of the transmission signatures is compiled for each of the N sources for the transmission device, by varying the operational parameters for the said source.

4. Method in accordance with one of the preceding claims, characterised in that the depth of immersion for each of the sources is determined by combining the depth measurements carried out before and after the transmission of each seismic pulse.

5. Device for applying the method in accordance with claim 4, comprising a means of reception for sensing the sound waves transmitted by the N sources, a system of data acquisition comprising a means of amplifying the signals supplied by the said means of reception, a means (6) for the digitalisation and recording of the digitalised signals, a means of processing and a means of memorising the transmission signatures comprising the catalogue, the means of reception including a sensor (H) located in the vicinity of each source (e$_i$), characterised in that the data acquisition system comprises a means of selection to apply, to the means of digitalisation and recording, signals corresponding to those supplied by each sensor and amplified using a different gain, depending on whether the depth of immersion of the source or the transmission signal is to be determined.

6. Device in accordance with claim 5, characterised in that the means of amplification comprises two amplifiers (3, 4) adapted to amplify, in parallel, the signals supplied by each sensor (H) and the said means of selection includes a switch (5) operated by the means of digitalisation and recording (6) before and after the transmission of each seismic pulse.

7. Device in accordance with claim 5, characterised in that the means of amplification comprises a single variable gain amplifier (9) adapted to amplify the signals supplied by each sensor (H) and a means of selection comprising an element (10) operated by the means of digitalisation and recording (6) in order to generate a control signal which enables two different values to be applied, alternately, to the gain for the amplifier (9).

**FIG.1**

**FIG.2**

**FIG.3**

**FIG.4**

**FIG.5**

**FIG.6**